**Europäisches Patentamt**

**European Patent Office**

**Office européen des brevets**

(11) Numéro de publication : **0 129 454**
**B1**

(19)

(12) **FASCICULE DE BREVET EUROPÉEN**

(45) Date de publication du fascicule du brevet :
**21.01.87**

(21) Numéro de dépôt : **84401017.3**

(22) Date de dépôt : **17.05.84**

(51) Int. Cl.⁴ : **H 02 M 3/335**, H 02 H 3/24

(54) **Procédé de mesure de l'autonomie d'une alimentation électrique à découpage et dispositif pour sa mise en oeuvre.**

(30) Priorité : **17.06.83 FR 8310352**

(43) Date de publication de la demande :
**27.12.84 Bulletin 84/52**

(45) Mention de la délivrance du brevet :
**21.01.87 Bulletin 87/04**

(84) Etats contractants désignés :
**BE DE GB IT NL SE**

(56) Documents cités :
**DE-A- 2 318 437**
**US-A- 4 327 422**

(73) Titulaire : **LA TELEMECANIQUE ELECTRIQUE**
**33 bis, avenue du Maréchal Joffre**
**F-92000 Nanterre (FR)**

(72) Inventeur : **Augier, Jean-Louis**
**Villa La Gabyvette**
**F-06950 Falicon (FR)**
Inventeur : **Boutmy, Daniel**
**Boulevard Albert 1er**
**Le Roy René F-06130 Grasse (FR)**
Inventeur : **Moulin, Jean Marc**
**Les Falcons Lans en Vercors**
**F-38250 Villard de Lans (FR)**
Inventeur : **Gaude, Maurice**

**F-38128 Le Sappey en Chartreuse (FR)**

(74) Mandataire : **Marquer, Francis et al**
**CABINET MOUTARD 35, avenue Victor Hugo Rési-**
**dence Champfleury**
**F-78180 Voisins-le-Bretonneux (FR)**

Jouve, 18, rue St-Denis, 75001 Paris, France

## Description

La présente invention concerne un procédé de mesure de l'autonomie disponible à tout instant dans une alimentation électrique à découpage et un dispositif de mise en œuvre du procédé, permettant d'engendrer des signaux de service.

Il est déjà connu d'utiliser des condensateurs de stockage d'énergie placés dans le circuit primaire d'une alimentation à découpage, pour assurer une prolongation du fonctionnement de l'alimentation après une coupure du secteur.

Il est également connu d'engendrer des signaux de service qui, à la suite d'une coupure du secteur, avertissent de la cessation prochaine du fonctionnement de l'alimentation à la fin de l'écoulement d'une temporisation.

Toutefois, ces dispositifs ne sont pas en corrélation avec l'état de stockage d'énergie dans le primaire du transformateur que comporte l'alimentation et si, pour des raisons de vieillissement des composants, une tension suffisante ne peut plus être garantie pendant l'écoulement complet de la temporisation, le dispositif ne va pas détecter cet état de choses. Il peut donc arriver que, par suite du vieillissement des composants, la tension au primaire ne soit plus suffisante pour assurer un fonctionnement correct des appareils branchés sur l'alimentation alors que la temporisation ne s'est pas entièrement écoulée.

Dans un autre dispositif connu, on a établi une corrélation entre la tension aux bornes du condensateur du primaire et le déclenchement d'une temporisation. Pour cela, il est nécessaire de comparer la tension du condensateur à une tension de référence, ce qui présente deux inconvénients :

la tension primaire à comparer est de l'ordre de quelques centaines de volts, ce qui impose l'utilisation d'un pont diviseur en amont du comparateur, donc introduit une dissipation supplémentaire ;

le circuit de comparaison nécessite une alimentation auxiliaire référencée au zéro du condensateur du primaire, ce qui majore le coût du dispositif.

Le but principal de l'invention est de supprimer les inconvénients susvisés, en fournissant un procédé de mesure de l'autonomie disponible dans une alimentation à découpage qui dissipe le minimum d'énergie et produit un signal en corrélation avec l'énergie stockée dans le condensateur du primaire de l'alimentation à découpage.

L'invention a encore pour objet un dispositif de mise en œuvre du procédé, apte à engendrer des signaux de service et à garantir le déroulement complet des séquences de réinitialisation nécessaires.

L'invention concerne enfin un procédé de surveillance de la tension régulée fournie par l'alimentation à découpage.

Suivant l'invention, le procédé de mesure de l'autonomie disponible dans une alimentation à découpage branchée sur le secteur, ladite alimentation comportant un enroulement primaire couplé magnétiquement à un enroulement secondaire aux bornes duquel est branché le circuit d'utilisation par l'intermédiaire d'un circuit secondaire comprenant un moyen redresseur, un condensateur de stockage d'énergie dans le circuit de l'enroulement primaire et un commutateur de découpage, est caractérisé par le prélèvement, aux bornes de l'enroulement secondaire, pendant chaque phase de conduction du commutateur de découpage, d'une tension représentative de la charge dudit condensateur qui correspond à l'autonomie disponible ; par la comparaison de ladite tension à une tension de référence pour engendrer un signal annonciateur de la cessation prochaine de la tension de sortie régulée de l'alimentation. Selon l'invention, le dispositif de mise en œuvre dudit procédé, qui comprend une alimentation à découpage ayant un circuit primaire dans lequel est monté un condensateur de stockage d'énergie et un circuit secondaire couplé magnétiquement au circuit primaire, est caractérisé en ce que le circuit secondaire comprend des moyens pour détecter pendant chaque phase de conduction du commutateur de découpage une tension représentative de la tension aux bornes du condensateur de stockage, des moyens pour comparer cette tension représentative à une tension de référence, des moyens d'engendrer un premier signal indicatif du dépassement de la tension de référence et de déclencher, à partir du premier signal, une temporisation qui permet d'engendrer un deuxième signal décalé dans le temps par rapport au premier.

Un mode de réalisation du procédé comprend de plus un procédé de surveillance de la tension régulée permettant l'arrêt de l'alimentation à découpage lorsque la tension de sortie régulée tombe en dessous d'un certain seuil est, suivant l'invention, caractérisé en ce qu'il comporte :

détection de chaque passage de la tension de sortie régulée en dessous du seuil lorsque ledit passage intervient après l'écoulement d'un délai correspondant à un régime transitoire initial de fonctionnement ;

arrêt, à chacun des passages détectés, du commutateur de découpage de l'alimentation et émission d'un signal annonciateur de la disparition prochaine de la tension de sortie.

D'autres caractéristiques et avantages de l'invention apparaîtront plus clairement à la lecture de la description ci-après.

Au dessin annexé :

la figure 1 représente un circuit électronique de mise en œuvre du procédé de l'invention, appliqué à une alimentation à découpage du type dit « flyback » ;

la figure 2 représente les diagrammes temporels de signaux qui illustrent le fonctionnement dudit circuit ;

la figure 3 illustre l'application du circuit à une alimentation à découpage du type dit « forward » ; et

la figure 4 représente une variante perfectionnée qui permet la détection d'un passage prolongé de la tension régulée en dessous du seuil.

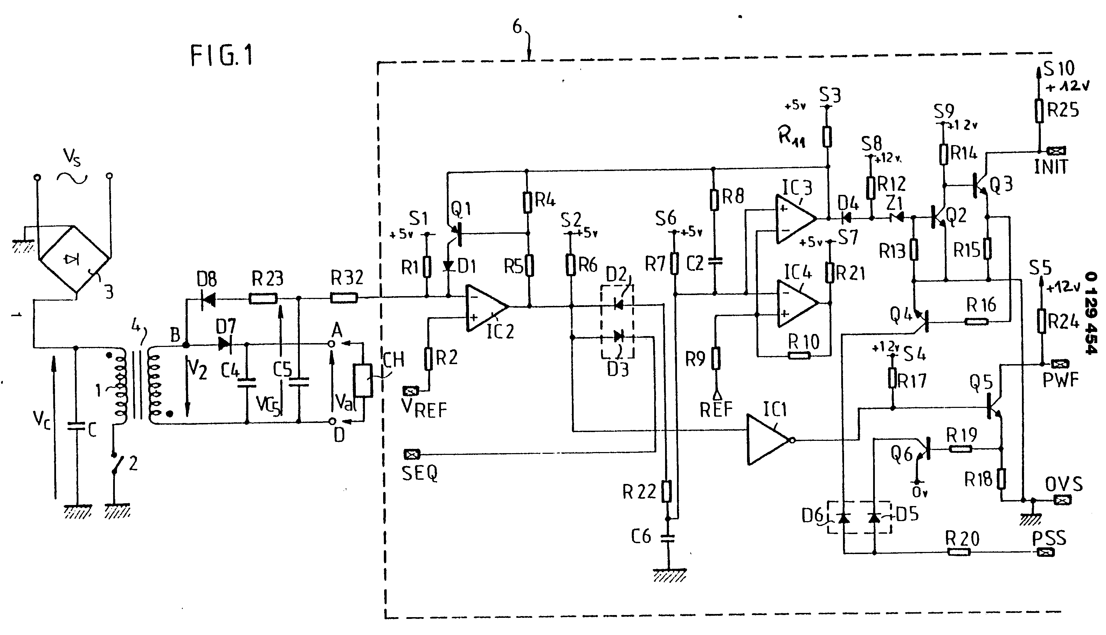

A la figure 1, la référence 1 désigne l'enroulement primaire d'un transformateur d'alimentation à découpage du type dit « flyback », c'est-à-dire dont le premier pôle est branché à une source de tension continue et dont l'autre pôle est relié à la masse par l'intermédiaire d'un transistor de découpage schématisé par un interrupteur 2. Ce type d'alimentation est bien connu de l'homme de l'art. La commande de l'interrupteur de découpage 2 pour délivrer une alimentation en tension qui présente les caractéristiques voulues sera considérée comme une vanne. La tension continue appliquée au transformateur est fournie par la tension secteur $V_S$ redressée par un pont de diodes 3 aux sorties duquel est branché un condensateur C de stockage d'énergie.

Ce condensateur C permet, comme on l'expliquera par la suite, de stocker une énergie suffisante pour garantir un fonctionnement sans désordre de l'alimentation en tension de l'appareil alimenté par cette alimentation à découpage, pendant un certain temps après une coupure du secteur.

Le transformateur comprend un enroulement secondaire 4 bobiné en sens inverse de l'enroulement primaire 1 et dont les bornes B, D sont reliées au circuit d'utilisation délivrant la tension Val à la charge CH par l'intermédiaire d'une diode $D_7$ dont l'anode est reliée à une borne de l'enroulement secondaire 4. Une capacité $C_4$ de stockage d'énergie est également branchée entre la cathode de la diode $D_7$ et l'autre borne de l'enroulement secondaire 4.

Le point commun à la diode $D_7$ et à l'enroulement 4 est relié à la cathode d'une diode $D_8$ dont l'anode est reliée à une borne d'une résistance $R_{23}$. L'autre borne de la résistance $R_{23}$ est reliée d'une part, par un condensateur $C_5$ au point commun au condensateur $C_4$ et à l'enroulement 4, et d'autre part à une résistance $R_{32}$ dont l'autre extrémité est reliée à l'entrée négative d'un circuit intégré $IC_2$ remplissant la fonction de comparateur. Cette entrée négative du circuit intégré $IC_2$ est reliée à une source de tension positive $S_1$ par exemple de 5 V par l'intermédiaire d'une résistance R1, tandis que son entrée positive est reliée par une résistance $R_2$ à une source de tension de référence désignée Vref, dont le rôle sera explicité ci-après. La sortie du circuit comparateur $IC_2$ est reliée premièrement au moyen d'une résistance $R_6$ à une source de tension $S_2$ par exemple de + 5 V, deuxièmement à l'anode d'une diode $D_3$ dont la cathode est reliée à une plage de connexion SEQ, troisièmement à la cathode d'une diode $D_2$ dont l'anode est reliée à la masse par l'intermédiaire d'une résistance $R_{22}$ et d'un condensateur $C_6$, quatrièmement à l'entrée d'un circuit inverseur $IC_1$ et cinquièmement à un pont de résistances formé par une résistance $R_5$ en série avec une résistance $R_4$, ce pont de résistances étant par ailleurs relié à une source de tension positive $S_3$, par exemple de 5 volts, par l'intermédiaire d'une résistance $R_{11}$. Le point commun aux résistances $R_5$ et $R_4$ est relié à la base d'un transistor $Q_1$ par exemple de type PNP, tandis que le point commun aux résistances $R_4$ et $R_{11}$ est relié à l'émetteur du transistor $Q_1$. Le collecteur du transistor $Q_1$ est relié à l'anode d'une diode $D_1$ dont la cathode est branchée à l'entrée négative du comparateur $IC_2$.

L'ensemble formé par le transistor $Q_1$, la diode $D_1$ et les résistances $R_4$, $R_5$, $R_{11}$ constitue un dispositif de verrouillage du comparateur $IC_2$ une fois qu'il a basculé. Le fonctionnement de ce dispositif sera expliqué ultérieurement. La sortie de l'inverseur $IC_1$ est branchée d'une part à la base d'un transistor $Q_5$, et d'autre part à une source de tension $S_4$ par exemple de + 12 V par l'intermédiaire d'une résistance $R_{17}$. Le collecteur du transistor $Q_5$ est relié d'une part à une plage de connexion PWF, et d'autre part par l'intermédiaire d'une résistance $R_{24}$ à une source de tension d'alimentation $S_5$ par exemple de + 12 V. L'émetteur du transistor $Q_5$ est connecté, au moyen d'une résistance $R_{18}$ à une plage de connexion OVS qui constitue la masse pour le signal PWF. Le circuit reliant le transistor $Q_5$ à la résistance $R_{18}$ est connecté à un circuit de limitation en courant constitué par une résistance $R_{19}$ reliée à la base d'un transistor $Q_6$ monté en émetteur commun, dont le collecteur est branché, par une diode $D_5$ montée en inverse et une résistance $R_{20}$, à une plage de connexion PSS. Cette plage de connexion PSS est destinée à envoyer au dispositif de commande de l'interrupteur 2 un signal pour le maintenir ouvert dès l'apparition d'une surintensité et arrêter ainsi l'alimentation.

Le point commun à la résistance $R_{22}$ et au condensateur $C_6$ est relié d'une part par une résistance $R_7$ à une source de tension $S_6$ par exemple de + 5 V, et d'autre part à l'entrée négative d'un circuit comparateur $IC_4$ et respectivement à l'entrée positive d'un deuxième circuit comparateur $IC_3$. Le point de jonction de la résistance $R_{22}$ au condensateur $C_6$ est également relié par un circuit comprenant en série un condensateur $C_2$ et une résistance $R_8$, au point de jonction des résistances $R_4$, $R_{11}$.

Le point de jonction des résistances $R_4$, $R_8$ et $R_{11}$ est relié à la sortie du circuit comparateur $IC_3$. L'entrée négative du comparateur $IC_3$ et l'entrée positive du comparateur $IC_4$ sont reliées entre elles. La liaison entre ces deux entrées se trouve par ailleurs raccordée à une source de tension de référence REF, par l'intermédiaire d'une résistance $R_9$. La sortie du comparateur $IC_4$ est reliée, d'une part, à une source de tension $S_7$ par exemple de + 5 V par l'intermédiaire d'une résistance $R_{21}$ et est rebouclée, d'autre part, à l'entrée positive du circuit $IC_4$ par l'intermédiaire d'une résistance $R_{10}$. Le rôle du circuit $IC_4$ associé aux résistances $R_9$, $R_{10}$, $R_{21}$ est de modifier la tension servant de seuil de basculement pour le comparateur $IC_3$. La sortie du

comparateur $IC_3$ est reliée à la cathode d'une diode $D_4$ dont l'anode est connectée d'une part, par une résistance $R_{12}$, à une source de tension $S_8$ par exemple de + 12 V et d'autre part à la cathode d'une diode Zener $Z_1$. L'anode de cette diode Zener $Z_1$ est branchée à la base d'un transistor $Q_2$, par exemple de type NPN.

Le collecteur de ce transistor $Q_2$ est branché, d'une part, à une source de tension $S_9$, par exemple de + 12 V, par l'intermédiaire d'une résistance $R_{14}$ et, d'autre part, à la base d'un transistor $Q_3$ par exemple de type NPN. L'émetteur du transistor $Q_2$ est relié premièrement, par une résistance $R_{13}$, à sa propre base, deuxièmement à la plage de connexion OVS, troisièmement par l'intermédiaire d'une résistance $R_{15}$ à l'émetteur du transistor $Q_3$. Le collecteur du transistor $Q_3$ est branché d'une part par une résistance $R_{25}$ à une source de tension $S_{10}$ par exemple de + 12 V et d'autre part à une plage de connexion INIT. Le circuit reliant l'émetteur du transistor $Q_3$ à la résistance $R_{15}$ est par ailleurs connecté, par l'intermédiaire d'une résistance $R_{16}$, à la base d'un transistor $Q_4$ par exemple de type NPN dont l'émetteur est branché au point de connexion des résistances $R_{13}$, $R_{15}$. Le collecteur du transistor $Q_4$ est relié par une diode $D_6$ montée en inverse au point de liaison de la diode $D_5$ à la résistance $R_{20}$.

Le circuit précédemment décrit sert à délivrer sur les plages de connexion INIT, PWF, PSS des signaux indicatifs du fonctionnement normal de l'alimentation et de la disparition prochaine de l'alimentation à la suite d'une coupure du secteur de durée minimale prédéterminée. Ces signaux sont délivrés à un appareil d'utilisation (charge CH) qui est alimenté par le circuit secondaire de l'alimentation et qui comprend une unité de traitement des signaux PWF et INIT. A titre d'exemple, cet appareil peut consister en l'unité centrale d'un automate et les cartes d'entrée/sortie. Dans ce cas l'unité de traitement peut être constituée par l'unité centrale à laquelle est affecté un programme de traitement qui permet à l'unité centrale de prendre des mesures de sauvegarde destinées à éviter la détérioration de l'automatisme à la suite d'une coupure prolongée du secteur.

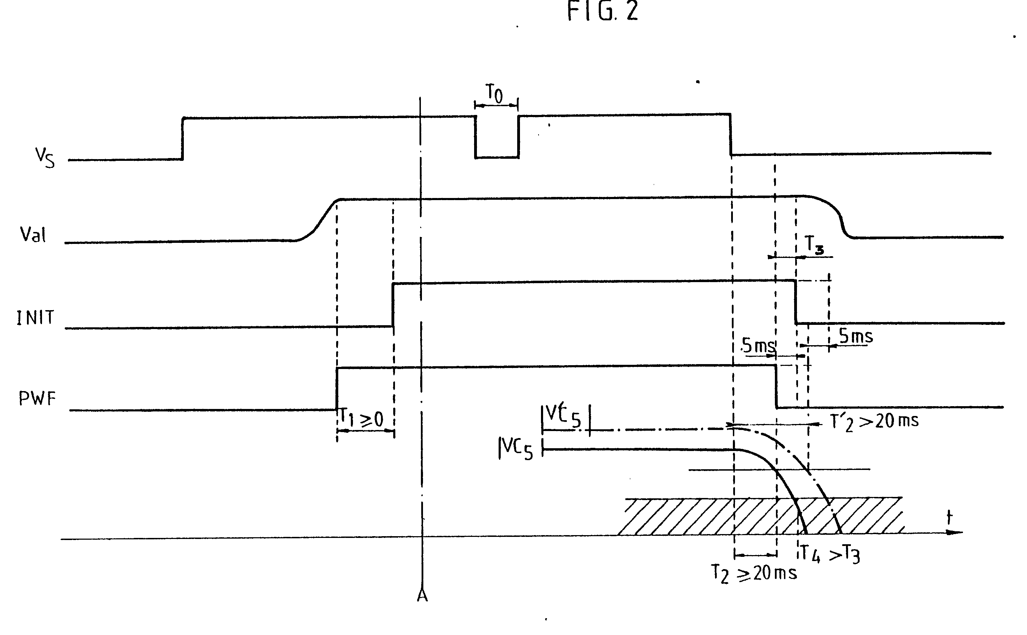

Le fonctionnement du dispositif représenté figure 1 sera décrit ci-après, en regard des diagrammes temporels visibles figure 2. Sur cette figure, la courbe de tension $V_s$ représente l'évolution en fonction du temps de la présence de la tension du secteur. Cette tension $V_s$ peut disparaître temporairement pendant une durée $T_0$ ou pour une période plus longue. La courbe de tension Val représente l'évolution en fonction du temps de la tension d'alimentation délivrée par les bornes A, D à l'appareil utilisateur CH. On constate que la tension d'alimentation courbe Val se maintient en dépit des interruptions du secteur de durée au plus égale à $T_0$. La courbe de tension prélevée à la borne PWF présente un front montant qui suit l'apparition d'une tension d'alimentation aux bornes de la charge et un front descendant qui annonce la disparition prochaine de cette tension régulée tout en assurant la conservation des informations nécessaires à la bonne remise en route de l'automatisme lors du retour secteur.

Lors d'un fonctionnement, après que l'alimentation a été branchée sur le secteur et que le condensateur réservoir C s'est chargé, l'enroulement primaire du transformateur d'alimentation 1 crée un champ magnétique croissant pendant les phases de conduction de l'interrupteur 2 ; le courant démagnétisant charge le condensateur $C_4$ par l'intermédiaire de la diode $D_7$ pendant les phases d'ouverture de l'interrupteur 2. Dans le cas où l'interrupteur 2 reste ouvert, le condensateur $C_5$, voit sa tension fixée par les résistances $R_1$, $R_{32}$ et par la source de tension $S_1$ appliquée à la résistance $R_1$. Pendant les périodes où l'interrupteur 2 est fermé, la tension au point B étant plus basse que la tension aux bornes du condensateur $C_5$, la diode $D_8$ est dans le sens passant et la charge du condensateur $C_5$ est abaissée au-dessous du niveau fixé par les résistances $R_1$, $R_{32}$ et la source de tension de $S_1$.

On comprend donc que pendant le fonctionnement normal de l'alimentation, la tension aux bornes de la capacité $C_5$ a tendance à suivre l'évolution de la tension $V_2$ qui est, à un facteur de proportionnalité négatif près, l'image de la tension Vc aux bornes du condensateur C. Par conséquent si la tension Vc croît, la tension $Vc_5$ décroît et si la tension Vc décroît la tension $Vc_5$ croît. Le facteur de proportionnalité est dû au rapport de transformation entre le primaire 1 et le secondaire 4 du transformateur et le signe négatif est dû au sens inverse des enroulements respectifs.

Lorsque la tension Vc croît, dès que la tension $Vc_5$ franchit en décroissant une valeur fixée par la tension de référence Vref et le pont diviseur de tension $R_1$, $R_{32}$ relié à la source de tension $S_1$, le comparateur $IC_2$ émet en sortie un signal de niveau 1. Ce signal de niveau 1 est transmis à l'inverseur $IC_1$ qui a donc sa sortie à zéro, ce qui a pour conséquence de bloquer le transistor $Q_5$ et de mettre la sortie PWF à un niveau de tension positif correspondant au 1 logique ; l'état PWF = 1 signale que la tension de sortie régulée s'établit.

A la suite de l'apparition du niveau 1 à la sortie du comparateur $IC_2$, la diode $D_2$ se trouve bloquée et le condensateur $C_6$ va se charger à travers la résistance $R_7$ dont la valeur est choisie de façon que la constante de temps fournie par la résistance $R_7$ et la capacité $C_6$ corresponde à une valeur $T_1$ pouvant être par exemple de l'ordre de 100 ms. Lorsque le condensateur $C_6$ sera suffisamment chargé, la tension à l'entrée positive du comparateur $IC_3$ deviendra supérieure à la tension de référence présente à son entrée négative, et la sortie du comparateur $IC_3$ passera de l'état zéro à l'état 1. Par l'intermédiaire de la résistance $R_8$ et de la capacité $C_2$, cette commutation à l'état 1 de la sortie du comparateur $IC_3$ accélère la charge de la capacité $C_6$ pour établir très rapidement les conditions initiales requises par une constante de temps obtenue par la capacité $C_6$ et la résistance $R_{22}$ pour garantir un délai d'une valeur $T_3$ entre les commutations à zéro du signal PWF et du signal INIT, commutations qui seront décrites dans la suite de la description. La diode $D_4$ se trouve donc dans l'état bloqué et la base du transistor $Q_2$ est polarisée par la diode Zener $Z_1$ et la résistance $R_{12}$ de façon que $Q_2$ conduise. Lorsque le transistor $Q_2$ conduit, la base du transistor $Q_3$ est pratiquement ramenée à un potentiel zéro et le transistor $Q_3$ se trouve bloqué, ce qui met la plage de connexion INIT à un potentiel élevé correspondant au 1 logique ; l'état INIT = 1 signale à l'équipement alimenté qu'il est sous tension régulée et peut initialiser son cycle de fonctionnement.

A ce moment, on se trouve dans la situation correspondant au trait mixte A porté sur la figure 2. Dans le cas où il apparaît sur le secteur une interruption de brève durée $T_0$, choisie par exemple inférieure à 20 ms, le circuit précédemment décrit a pour but de faire en sorte que cette brève interruption ne perturbe pas la marche de l'alimentation et qu'elle ne soit pas perçue par les appareillages branchés sur l'alimentation.

A cet effet, le condensateur C doit présenter une capacité telle qu'en marche normale, il puisse stocker une énergie suffisante pour qu'en cas de défaillance du secteur ne dépassant pas une durée $T_0$, l'alimentation continue de fonctionner normalement sans signaler une anomalie.

Le condensateur C est donc choisi de telle façon qu'après avoir été chargé par une tension du secteur dont la valeur efficace était minimale, la tension $V_{C_5}$, image de la tension Vc, qui diminue par suite de la décharge du condensateur $C_5$, ne passe pas en dessous de la tension de référence Vref faisant basculer le comparateur $IC_2$ avant un temps $T_2 \geqslant T_0$. Ceci doit rester vrai lorsque l'alimentation débite une puissance maximum. Lorsque la puissance demandée diminue ou lorsque avant la coupure, la tension du secteur sur plusieurs périodes était à sa valeur maximale, le temps au-delà duquel la tension $V_{C_5}$ passe en dessous de la tension Vref, atteindra une valeur $T'_2 > T_2$. Donc, dans l'exemple précédemment mentionné la valeur du temps $T'_2$ sera supérieure à $T_0$ et pourra éventuellement atteindre la seconde.

Si, par contre, une interruption du secteur supérieure à la durée $T_0$ se produit, le condensateur C se décharge et au bout d'un temps $T'_2$ l'image de la tension de Vc devient inférieure à la tension Vref. A ce moment, le comparateur $IC_2$ bascule à zéro, la sortie du circuit inverseur $IC_1$ passe au niveau 1, le transistor $Q_5$ conduit et la plage PWF est mise à un bas niveau de tension représentant l'état zéro. Pendant ce temps, la sortie du comparateur $IC_2$ étant à zéro, la diode $D_2$ est passante et le condensateur $C_6$ se décharge dans la résistance $R_{22}$ avec une constante de temps d'une valeur $T_3$ que l'on fixe par exemple de façon telle qu'au bout de 5 ms, la tension aux bornes de la capacité $C_6$ soit inférieure à la tension aux bornes de l'entrée négative

du comparateur $IC_3$, ce qui provoque le basculement à l'état zéro de la sortie du comparateur $IC_3$. La diode $D_4$ se trouve donc passante et la base du transistor $Q_2$ n'est plus polarisée de façon suffisante pour que le transistor $Q_2$ conduise. Le transistor $Q_2$ est donc bloqué ce qui provoque la conduction du transistor $Q_3$ et porte la plage de connexion INIT à un potentiel représentatif du niveau zéro. A ce moment là, l'appareil utilisant l'alimentation a été prévenu, lors du passage à zéro du signal PWF, de la disparition prochaine de l'alimentation, ce qui laisse audit appareil le temps de prendre les mesures de sauvegarde pendant le temps par exemple de 5 ms précédant le passage à zéro du signal INIT qui arrête toutes les opérations dans l'appareil préalablement à la disparition totale de l'alimentation.

La capacité du condensateur C est calculée également pour que l'alimentation fonctionne encore correctement pendant un temps supérieur ou égal au temps, par exemple de 5 ms séparant la chute du signal PWF de celle du signal INIT. Comme on le voit, le temps $T_4$ pendant lequel le fonctionnement de l'alimentation est encore acceptable après l'apparition du signal PWF, est supérieur à $T_3$. Pendant ce temps, l'alimentation peut fournir une puissance suffisante garantissant un fonctionnement normal de l'appareil.

Lorsque la sortie du comparateur $IC_3$ passe de l'état 1 à l'état zéro, la résistance $R_8$ et le condensateur $C_2$ accélèrent la décharge du condensateur $C_6$.

Dans l'intervalle de temps qui sépare la transition de 1 à zéro du comparateur $IC_2$, du moment où le comparateur $IC_3$ change d'état, le circuit associé au transistor $Q_1$ sert de moyens de verrouillage du comparateur $IC_2$. En effet, lorsque la sortie du comparateur $IC_2$ passe de l'état 1 à l'état zéro, et pendant le temps où le condensateur $C_6$ se décharge, la sortie du comparateur $IC_3$ étant encore à 1, la base du transistor $Q_1$ se trouve polarisée de façon telle que le transistor $Q_1$ conduit. Ceci a pour conséquence d'augmenter le dépassement de la tension de référence Vref et donc de confirmer le positionnement à zéro de la sortie du comparateur $IC_2$. Ceci a pour but d'éviter qu'une coupure brève, mais supérieure à un temps, par exemple de 20 ms, du secteur vienne remettre le signal PWF à 1 sans que le signal INIT soit passé par l'état zéro. Une fois que le condensateur $C_6$ est déchargé et que le comparateur $IC_3$ est passé de l'état 1 à l'état zéro, les sorties des comparateurs $IC_3$ et $IC_2$ étant toutes les deux à zéro, le transistor $Q_1$ ne peut plus être conducteur et déverrouille le comparateur $IC_2$ dont la sortie va pouvoir évoluer en fonction de la tension $V_{C_5}$. De même lorsque les sorties des comparateurs $IC_2$ et $IC_3$ sont toutes les deux à 1, le transistor $Q_1$ reste bloqué. Le transistor $Q_1$ est conducteur lorsque le comparateur $IC_2$ est passé à zéro et que le comparateur $IC_3$ n'est pas encore passé de l'état 1 à l'état zéro.

Le comparateur $IC_4$ permet d'abaisser le seuil de basculement du comparateur $IC_3$ une fois que ce dernier est passé de l'état 1 à l'état zéro.

En effet, lorsque la sortie du comparateur $IC_3$ est à l'état 1, le signal présent sur son entrée positive est supérieur au signal présent sur son entrée négative. La situation est inverse pour les signaux appliqués aux entrées du comparateur $IC_4$ et le comparateur $IC_4$ a sa sortie à zéro. Lorsque la tension aux bornes de la capacité $C_6$ diminue, la sortie du comparateur $IC_4$ bascule de l'état zéro à l'état 1 tandis que la sortie du comparateur $IC_3$ bascule de l'état 1 à l'état zéro. Le passage à l'état 1 de la sortie du comparateur $IC_4$ a pour effet d'augmenter par l'intermédiaire de $R_{10}$, la tension appliquée à l'entrée négative du comparateur $IC_3$ et par conséquent confirme son positionnement à zéro.

Lors de la réapparition du secteur, le comparateur $IC_4$ va repasser à l'état zéro et la tension de basculement du comparateur $IC_3$ va diminuer.

Pour protéger les circuits générateurs des signaux INIT et PWF précédemment décrits contre les surcharges et les courts-circuits, les transistors $Q_4$ et $Q_6$ détectent le courant circulant respectivement dans les résistances $R_{15}$ et $R_{18}$ et génèrent, en cas de surintensité, un zéro logique sur la plage PSS, signalant ainsi qu'une anomalie a déclenché cette « protection des signaux de service » et provoquant la disjonction de l'alimentation.

Les sources de tension $S_1$ à $S_{10}$ sont fournies par des circuits secondaires de l'alimentation qui sont de conception classique et n'ont pas été représentés pour cette raison. Le circuit précédemment décrit permet donc d'engendrer des signaux de service utilisables par un appareil, ces signaux indiquant que l'alimentation fonctionne normalement, la disparition future de toute alimentation suite à une coupure de secteur ou une réapparition des conditions normales de fonctionnement après le rétablissement du secteur.

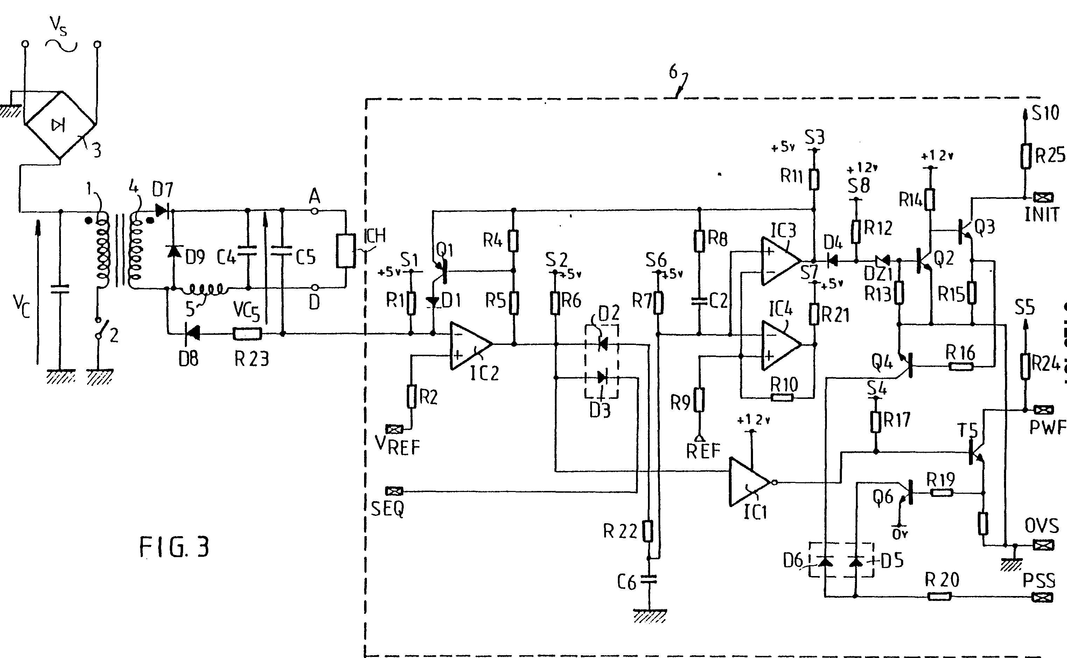

La figure 3 représente l'application du circuit contenu dans le bloc 6 de la figure 1 à un autre type d'alimentation dite « forward » dans laquelle on a affecté les mêmes numéros de références aux éléments identiques. Cette alimentation comprend en plus une inductance 5 indispensable au filtrage de la tension de l'enroulement 4. Cette inductance 5 se trouve dans le circuit reliant l'enroulement secondaire 4 au condensateur $C_4$, du côté opposé à la diode $D_7$. Une diode $D_9$ est connectée par sa cathode au point de jonction du condensateur $C_4$ et de la cathode de la diode $D_7$, et par son anode au point de jonction de l'inductance 5 et de l'enroulement 4 du transformateur. La diode $D_8$ est reliée par sa cathode au point de jonction de la diode $D_9$, de l'inductance 5 et de l'enroulement 4, et le condensateur $C_5$ est relié au point de jonction des diodes $D_7$ et $D_9$ et au condensateur $C_4$.

Le fonctionnement de ce circuit est identique à celui décrit à propos de la figure 2.

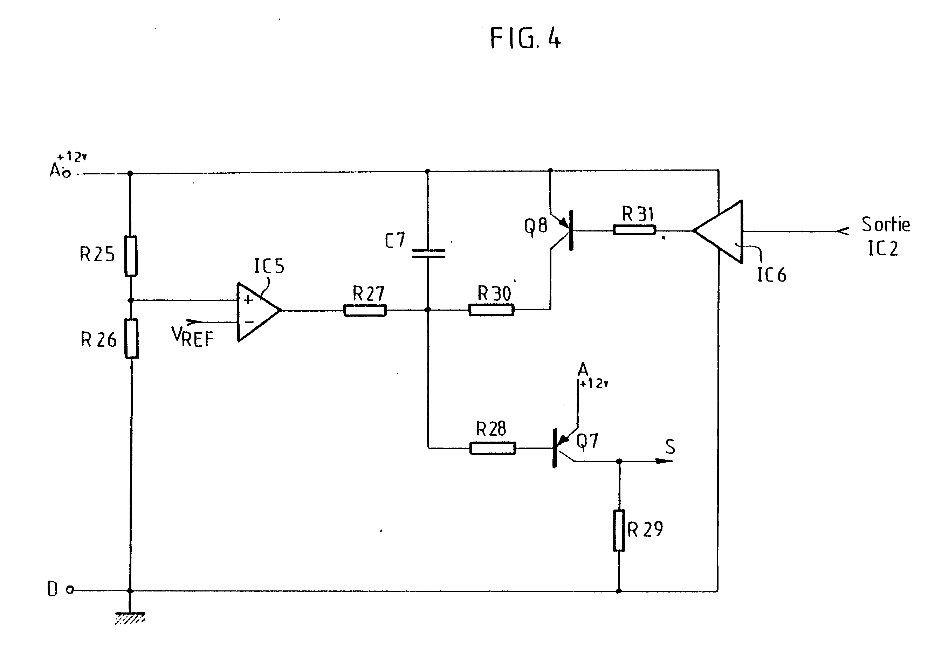

Les circuits faisant l'objet des figures 1 et 3 peuvent être améliorés au moyen du circuit représenté figure 4. L'intégration de ce circuit dans ceux représentés figures 1 et 3 s'effectue :

en raccordant la sortie du comparateur $IC_2$ à l'entrée du circuit adaptateur de niveaux $IC_6$,

en raccordant la sortie S d'arrêt de découpage à un circuit de contrôle de découpage non représenté de l'interrupteur 2, et

en reliant les bornes A et D en parallèle sur les pôles A, D homologues de la sortie de tension régulée des circuits représentés sur les figures 1 ou 3.

La limitation d'énergie maximale appliquée par le commutateur de découpage 2 au transformateur de l'alimentation peut entraîner, dans certaines conditions de tension secteur anormalement basse et/ou de surcharge modérée de sortie, à des régimes de sous-tension établie et non compensable. Pour éviter les perturbations liées à un tel fonctionnement dégradé, le dispositif représenté figure 4 détecte par le pont diviseur $R_{25}$, $R_{26}$ et le comparateur $IC_5$ toute baisse de tension en dessous d'une tension Vref qui peut être identique ou non à la tension Vref utilisée dans les circuits représentés sur les figures 1 à 3. Lorsque cette détection a lieu, la sortie du comparateur $IC_5$ passe à zéro et ce signal est transmis sur la base d'un transistor $Q_7$, par l'intermédiaire d'un circuit de temporisation $R_{27}$, $C_7$ et d'une résistance $R_{28}$. Ce signal zéro est ensuite inversé par le transistor $Q_7$ par exemple de type PNP qui fournit, sur la résistance $R_{29}$ (Sortie S) un signal logique 1 de blocage du circuit de commande de découpage. On obtient un arrêt du découpage qui provoque la commutation précédemment décrite de la sortie du comparateur $IC_2$ qui passe à zéro. Par l'intermédiaire du circuit d'adaptation de niveaux $IC_6$ et de la résistance $R_{31}$, ce signal zéro commande la conduction du transistor $Q_8$ qui décharge rapidement le condensateur $C_7$ au travers de la résistance de limitation $R_{30}$. Cette décharge rapide du condensateur $C_7$ sert à remettre le circuit de temporisation $R_{27}$, $C_7$ dans les conditions initiales requises à la prochaîne mise sous tension. En effet, lors du régime initial d'établissement de la tension de sortie, le comparateur $IC_5$ détecte forcément une sous-tension qui, si elle était prise en compte, bloquerait le système et arrêterait le découpage.

Pour éviter un tel blocage initial, le circuit de temporisation $R_{27}$, $C_7$ retarde, par exemple de quelques milli-secondes, la sortie du signal d'arrêt du découpage dans le cas d'une sous-tension passagère liée à l'établissement de la tension régulée. La sortie du comparateur $IC_5$ repasse ensuite à 1 avant que la charge du condensateur $C_7$ atteigne le seuil du transistor $Q_7$, ce qui permet de « masquer » la dite sous-tension initiale.

## Revendications

1. Procédé de mesure de l'autonomie disponible d'une alimentation électrique à découpage branchée sur une source externe, continue ou alternative, et comportant un enroulement primaire (1) magnétiquement couplé à un enroulement secondaire (4) aux bornes duquel est branché le circuit d'utilisation par l'intermédiaire d'un circuit secondaire comprenant un moyen redresseur ($D_7$, $C_4$), un condensateur (C) de stockage d'énergie étant monté dans le circuit de l'enroulement primaire (1), caractérisé par le prélèvement aux bornes de l'enroulement secondaire pendant chaque phase de conduction du commutateur de découpage, d'une tension ($V_2$) représentative de la charge du condensateur (C) du circuit primaire, qui correspond à l'autonomie disponible, et par la comparaison de ladite tension à une tension de référence (Vref) pour engendrer un signal (PWF) annonciateur de la cessation prochaine de la tension de sortie régulée de l'alimentation.

2. Procédé selon la revendication 1, caractérisé en ce que la capacité du condensateur (C) du circuit primaire (1) et la tension de référence (Vref) sont choisies de telle façon que lors de la disparition du secteur, le signal annonciateur soit généré au bout d'un temps au moins égal à la durée de micro-coupure tolérée ($T_0$) et que lorsque la tension aux bornes du condensateur (C) correspond à la tension de référence (Vref), le condensateur (C) possède encore une énergie suffisante pour assurer un fonctionnement correct des circuits d'utilisation pendant un temps supérieur à un temps ($T_3$) prédéterminé.

3. Procédé selon la revendication 2, caractérisé en ce que la durée de la micro-coupure tolérée ($T_0$) ainsi que le susdit temps prédéterminé ($T_3$) sont ajustables.

4. Procédé selon l'une des revendications 1 à 3, caractérisé en ce que le susdit signal (PWF) annonciateur de la disparition prochaine de la tension de sortie régulée de l'alimentation est suivi d'un signal donnant l'ordre d'arrêt aux appareils connectés à ladite alimentation et en ce qu'un signal annonciateur de la présence de la tension de sortie régulée est suivi après une période de temps prédéterminée (temporisation $R_7$, $C_6$) d'un signal (INIT) donnant l'ordre de mise en marche auxdits appareils.

5. Procédé selon la revendication 4, caractérisé en ce qu'il comprend la détection de l'inhibition des susdits signaux annonciateur (PWF) et/ou de mise en marche (INIT) au moyen d'un circuit de protection qui engendre un signal (PSS) empêchant l'établissement de la tension régulée de sortie de l'alimentation.

6. Dispositif de mise en œuvre du procédé selon la revendication 1, ce dispositif comprenant une alimentation à découpage ayant un circuit primaire dans lequel est monté un condensateur de stockage d'énergie et un circuit secondaire couplé magnétiquement au circuit primaire, caractérisé en ce que le circuit secondaire (4) comprend des moyens ($D_8$, $R_{23}$, $C_5$) pour détecter pendant chaque phase de conduction du commutateur de découpage une tension représentative de la tension aux bornes du condensateur de stockage (C), des moyens pour comparer ($IC_2$) cette tension représentative à une tension de référence (Vref), des moyens d'engendrer ($IC_1$, $Q_5$) un premier signal (PWF) indicatif du dépassement de la tension de référence (Vref) et de déclencher, à partir du premier signal, une temporisation ($R_{22}$, $C_6$) qui permet d'engendrer un deuxième signal (INIT) décalé dans le temps par rapport au premier.

7. Dispositif selon la revendication 6, caractérisé en ce qu'il comprend des moyens de verrouiller ($R_4$, $R_5$, $Q_1$, $D_1$) les susdits moyens de comparaison une fois que la tension de référence (Vref) est franchie.

8. Dispositif selon l'une des revendication 6 et 7, caractérisé en ce qu'il comporte un circuit de protection des sorties de signaux de service (PWF et INIT), ledit circuit de protection générant un signal annulant la tension de sortie régulée de l'alimentation lors des surcharges et courts-circuits inhibant lesdits signaux (PWF et INIT).

9. Procédé selon la revendication 1, comprenant en plus un procédé pour la surveillance de la tension régulée et l'arrêt de l'alimentation à découpage en cas de sous tension de la tension de sortie régulée, caractérisé en ce qu'il comporte :

la détection de chaque passage de la tension de sortie régulée en dessous d'un seuil, lorsque ledit passage intervient après l'écoulement d'un délai correspondant à un régime transitoire initial de fonctionnement ;

l'arrêt à chacun des passages détectés du commutateur de découpage de l'alimentation ; et

l'émission d'un signal annonciateur de la disparition prochaine de la tension de sortie.

10. Procédé selon la revendication 9, caractérisé en ce que chaque détection de sous-tension prise en compte provoque le réarmement rapide de la temporisation de masquage initial.

**Claims**

1. A process for measuring the available self sufficiency of a chopped electric power supply connected to an external source, AC or DC, and comprising a primary winding (1) magnetically coupled to a secondary winding (4) to the terminals of which the user circuit is connected by means of a secondary circuit comprising a rectifier means ($D_7$, $C_4$), an energy storage capacitor (C) being connected in the primary winding circuit (1), characterized in that, during each conduction phase of the chopping switch, from the terminals of the secondary winding, a voltage ($V_2$) is taken representative of the charge of the capacitor (C) of the primary circuit, which corresponds to the available self sufficiency, and in that said voltage is compared with a reference voltage (Vref) for generating a signal (PWF) announcing the impending cessation of the regulated output voltage of the power supply.

2. The process as claimed in claim 1, characterized in that the capacity of said capacitor (C) of the primary circuit (1) and said reference voltage (Vref) are chosen so that, when the mains supply disappears, said announcing signal is generated after a time at least equal to the tolerated microcut duration ($T_0$) and so that, when the voltage at the terminals of said capacitor (C) corresponds to said reference voltage (Vref), said capacitor (C) still has sufficient energy to ensure correct operation of the user circuits for a time greater than a predetermined time ($T_3$).

3. The process as claimed in claim 2, characterized in that the duration of the tolerated microcut ($T_0$) as well as said predetermined time ($T_3$) are adjustable.

4. The process as claimed in one of claims 1 to 3, characterized in that said signal (PWF) announcing the impending disappearance of the regulated output voltage of the power supply is followed by a signal giving the stopping order to the apparatus connected to said power supply and wherein a signal announcing the presence of the regulated output voltage is followed, after a predetermined period of time (time delay $R_7$, $C_6$) by a signal (INIT) giving the starting order to said apparatus.

5. The process as claimed in claim 4, characterized in that it comprises the detection of the inhibition of said announcing (PWF) and/or starting (INIT) signals by means of a protection circuit which generates a signal (PSS) preventing establishment of the regulated output voltage of the power supply.

6. A device for implementing the process as claimed in claim 1, said device comprising a chopped power supply whose primary circuit comprises an energy storage capacitor and a secondary circuit magnetically coupled to the primary circuit, characterized in that the secondary circuit (4) comprises means ($D_8$, $R_{23}$, $C_5$) for detecting, during each conducting phase of the chopping switch, a voltage representative of the voltage at the terminals of said storage capacitor (C), means for comparing ($IC_2$) this representative voltage with a reference voltage (Vref), means for generating ($IC_1$, $Q_5$) a first signal (PWF) indicating that the reference voltage (Vref) has been crossed and means for triggering off from said first signal a time delay ($R_{22}$, $C_6$) allowing a second signal (INIT) to be generated staggered in time with respect to the first one.

7. The device as claimed in claim 6, characterized in that it comprises means for locking ($R_4$, $R_5$, $Q_1$, $D_1$), said comparison means once said reference voltage (Vref) has been crossed.

8. The device as claimed in one of claims 6 and 7, characterized in that it comprises a circuit for protecting the service signal outputs (PWF and INIT), said protection circuit generating a signal cancelling out the regulated output voltage of the power supply during overloads and short circuits inhibiting said signals (PWF and INIT).

9. A process according to claim 1, further comprising a process for monitoring the regulated voltage and for stopping the chopped power supply should an undervoltage of the regulated output voltage occur, characterized in that it comprises :

the detection of each passage of said regulated output voltage below a threshold, when said passage occurs after a time corresponding to initial transitory operating conditions ;

stopping at each of the detected passages of the chopping switch of the power supply ; and

emission of a signal announcing the impending disappearance of the output voltage.

10. The process as claimed in claim 9, characterized in that each voltage detection taken into account causes rapid resetting of the initial masking time delay.

**Patentansprüche**

1. Verfahren, um die Verfügbarkeit einer getakteten elektrischen Stromversorgung zu messen, welche an eine externe Gleich- oder Wechselstromquelle angeschlossen ist, mit einer Primärwicklung (1), die magnetisch mit einer Sekundärwicklung (4) gekuppelt ist, an deren Klemmen der Verbraucherkreis angeschlossen ist, durch einen Sekundärkreis mit einer Gleichrichtervorrichtung ($D_7$, $C_4$), wobei ein Kondensator (C) zur Energiespeicherung in den Schaltkreis der Primärwicklung (1) eingebaut ist, dadurch gekennzeichnet, dass an den Klemmen der Sekundärwicklung, während jeder leitenden Phase des Taktschalters, eine Spannung ($V_2$) entnommen wird, die repräsentativ ist für die Last des Kondensators (C) des Primärkreises, welche der verfügbaren Autonomie entspricht und dass besagte Spannung mit einer Referenzspannung (Vref) verglichen wird, um ein Signal (PWF) zu erzeugen, das den bevorstehenden Ausfall der regulierten Ausgangsspannung der Versorgung ankündigt.

2. Verfahren nach Anspruch 1, dadurch gekennzeichnet, dass die Kapazität des Kondensators (C) des Primärkreises (1) und die Referenzspannung (Vref) so gewählt sind, dass, bei Ausfall des Stromnetzes, das Ankündigungssignal erzeugt wird, nach einer Zeitspanne, die mindestens der Dauer der zulässigen Mikrounterbrechung ($T_0$) entspricht und dass, wenn die Spannung an den Kondensatorklemmen (C) der Referenzspannung (Vref) entspricht, der Kondensator (C) noch genügend Energie besitzt, um den störungsfreien Betrieb der Verbraucherkreise für einen Zeitraum zu gewährleisten, der grösser ist als eine vorstimmte Zeitspanne ($T_3$).

3. Verfahren nach Anspruch 2, dadurch gekennzeichnet, dass die zulässige Dauer der Mikrounterbrechung ($T_0$), sowie die obengenannte vorbestimmte Zeitspanne ($T_3$) einstellbar sind.

4. Verfahren nach einem der Ansprüche 1 bis 3, dadurch gekennzeichnet, dass auf besagtes Signal (PWF), welches den bevorstehenden Ausfall der regulierten Ausgangsspannung der Stromversorgung ankündigt, ein Signal folgt, welches den an besagte Versorgung angeschlossenen Geräten einen Ausschaltbefehl mitteilt und dass auf ein Signal, welches das Vorhandensein der regulierten Ausgangsspannung anzeigt, nach einer vorbestimmten Zeitspanne (Zeitverzögerung $R_7$, $C_6$) ein Signal (INIT) folgt, welches den besagten Geräten den Startbefehl mitteilt.

5. Verfahren nach Anspruch 4, dadurch gekennzeichnet, dass es beinhaltet : die Erfassung der Hemmung des besagten Ankündigungssignals (PWF) und/oder Startsignals (INIT) durch einen Schutzkreis, welcher ein Signal (PSS) erzeugt, das die Erzeugung der regulierten Ausgangsspannung der Versorgung verhindert.

6. Vorrichtung zur Durchführung des Verfahrens nach Anspruch 1, wobei diese Vorrichtung eine getaktete Stromversorgung besitzt, mit einem Primärstromkreis, in den ein Energiespeicherkondensator eingebaut ist und einem Sekundärstromkreis, der magnetisch mit dem Primärkreis gekuppelt ist, dadurch gekennzeichnet, dass der Sekundärkreis (4) Mittel ($D_8$, $R_{23}$, $C_5$) besitzt, um, während jeder leitenden Phase des Taktschalters eine Spannung zu erfassen, die repräsentativ ist für die Spannung an den Klemmen des Speicherkondensators (C), sowie Mittel ($IC_2$), um diese repräsentative Spannung mit einer Referenzspannung (Vref) zu vergleichen, Mittel ($IC_1$, $Q_5$), um ein erstes Signal (PWF) zu erzeugen, das die Überschreitung der Referenzspannung (Vref) anzeigt und um, infolge des ersten Signals, eine Zeitverzögerung ($R_{22}$, $C_6$) auszulösen, welche es erlaubt, ein zweites Signal (INIT) zu erzeugen, das im Verhältnis zum ersten zeitlich verschoben ist.

7. Vorrichtung nach Anspruch 6, dadurch gekennzeichnet, dass sie Mittel besitzt, um besagte Vergleichsmittel ($R_4$, $R_5$, $Q_1$, $D_1$) nach Überschreitung der Referenzspannung (Vref) zu sperren.

8. Vorrichtung nach einem der Ansprüche 6 und 7, dadurch gekennzeichnet, dass sie einen Stromkreis zum Schutz der Ausgänge der Betriebssignale (PWF und INIT) enthält, wobei besagter Schutzkreis ein Signal erzeugt, das die regulierte Ausgangsspannung der Versorgung zum Fallen bringt, wenn besagte Signale (PWF und INIT) durch Überlastungen oder Kurzschlüsse gehemmt sind.

9. Verfahren nach Anspruch 1, das ausserdem ein Verfahren zur Überwachung der regulierten Spannung und zur Sperrung der getakteten Versorgung bei Unterspannung der regulierten Ausgangsspannung enthält, dadurch gekennzeichnet, dass es beinhaltet :

die Erfassung jeder Unterschreitung einer Schwelle der regulierten Ausgangsspannung, wenn besagte Unterschreitung eintritt nach Ablauf einer Frist, welche den anfänglichen transitorischen Betriebsbedingungen entspricht,

die Sperrung, bei jeder erfassten Unterschreitung, des Taktschalters der Versorgung, und

die Abgabe eines Signals, welches den bevorstehenden Ausfall der Ausgangsspannung ankündigt.

10. Verfahren nach Anspruch 9, dadurch gekennzeichnet, dass jede Erfassung einer berücksichtigten Unterspannung die schnelle Entsperrung der anfänglichen Verdeckungsverzögerung zur Folge hat.

0 129 454

FIG.1

FIG. 2

FIG. 3

0 129 454

# FIG. 4

0 129 454